# EUROPÄISCHE PATENTANMELDUNG

(11) **EP 4 477 376 A2**
(43) Veröffentlichungstag der Anmeldung: **18.12.2024**
(21) Anmeldenummer: 24181685.9
(22) Anmeldetag: 12.06.2024
(51) Int. Cl.: B29B 11/16, B29C 37/00, B29C 70/08, B29C 70/44, B29C 70/46, B29C 70/48

(54) **VORMATERIAL ZUR HERSTELLUNG EINES FASERVERSTÄRKTEN WERKSTÜCKS**

(30) Priorität: 13.06.2023 DE 102023115370
(71) Anmelder: Mack, Oliver, 69245 Bammental (DE)
(72) Erfinder: Mack, Oliver, 69245 Bammental (DE)
(74) Vertreter: Kesselhut, Wolf

(57) **Zusammenfassung**

Die Erfindung betrifft ein Vormaterial (12) zur Herstellung eines faserverstärkten Werkstücks (8), welches eine ungetränkte Lage aus Fasermaterial (13) umfasst, das dazu eingerichtet ist, mit einem reaktiv härtbaren Ein- oder Mehrkomponenten Kunstharz getränkt zu werden, wobei, das Vormaterial weiterhin eine flexible Lage aus Fixiermaterial (14) umfasst, mit der die ungetränkte Lage aus Fasermaterial (13) oberflächlich in einem Kontaktbereich zwischen der flexiblen Lage aus Fixiermaterial (14) und der Lage aus Fasermaterial (13) in der Weise verbunden ist, dass Fasern (131) des ungetränkten Fasermaterials (13) in dem Kontaktbereich durch das Fixiermaterial (14) in ihrer Lage zueinander fixiert sind. Das Vormaterial zeichnet sich dadurch aus, dass die flexible Lage aus Fixiermaterial (14) eine Lage aus Verbindungsmaterial (44) enthält, welches die Fasern (131) des Fasermaterials (13) im Kontakt-bereich in ihrer Lage fixiert, und welches in dem reaktiv aushärtbaren Ein- oder Mehrkomponentenkunstharz (81) lösbar, sodass das Fixiermaterial (14) nach dem Tränken mit Harz (81) vom Fasermaterial (13) entfernbar ist.

## Beschreibung

Die Erfindung betrifft ein Vormaterial zur Herstellung eines faserverstärkten Werkstücks, gemäß dem Oberbegriff von Anspruch 1.

Weiterhin betrifft die Erfindung ein Verfahren und eine Vorrichtung zur Herstellung eines solchen Vormaterials.

Außerdem betrifft die Erfindung ein Verfahren zum Handhaben eines Zuschnitts, ein Verfahren zum Lagern von Zuschnitten, ein Verfahren zum Zuschneiden eines Zuschnitts, ein Verfahren zum Auf- oder Einlegen eines Zuschnitts auf oder in eine Form, ein Verfahren zum Herstellen eines Werkstücks aus Verbundwerkstoff und ein Werkstück aus Verbundwerkstoff, wobei der Zuschnitt das Vormaterial umfasst.

Im Stand der Technik ist es bekannt, Bauteile aus Faserverbundwerkstoffen herzustellen, indem aus einem textilen Ausgangsmaterial ein Stück zugeschnitten und dieses anschließend mit einem Kunstharz laminiert wird. Solche Zuschnitte können für Einzelstücke per Hand mit einer speziellen Schere ausgeführt werden. Da sich Fasermaterial, wie insbesondere ein Glas- oder Kohlefasergewebe oder Gelege, beim Zuschneiden von Hand leicht verzieht, haben sich seit längerem CNC-Schneidplotter durchgesetzt. Um der Verzugsneigung des Fasermaterials beim Schneidvorgang zu begegnen, sind die CNC-Schneidplotter mit sehr scharfen Schneidwerkzeugen und mit einem Vakuumtisch ausgestattet, welcher das Fasermaterial während des Schneidvorganges ansaugt und auf dem Vakuumtisch fixiert.

Üblicherweise findet das Laminieren des Fasermaterial mit dem Kunstharz an einem anderen Arbeitsplatz als das Ausschneiden, bzw. Zuschneiden des Zuschnitts statt. Beim Transport von Zuschnitten aus Fasermaterial besteht dabei stets die Gefahr des Verzugs oder gar der Beschädigung des Fasermaterials. Um dies zu vermeiden, wird bei der Handhabung solcher Zuschnitte ein erheblicher Aufwand betrieben. Da die Zuschnitte kaum ohne Verzug oder Beschädigung aufeinander gelegt werden können, ist es gängige Praxis, solche Zuschnitte unmittelbar vor der Herstellung eines Bauteils zuzuschneiden, sie ohne Zwischenlagerung zur Weiterverarbeitung zu transportieren und alsbald zu verarbeiten.

Zusätzlich zur mechanischen Empfindlichkeit besteht eine weitere Problematik beim Lagern solcher Zuschnitte darin, dass sich während der Lagerzeit Staub auf den Zuschnitten ablagern kann, welcher beim anschließenden Laminieren, d.h. dem Benetzen des Fasermaterials mit dem reaktiven, selbsthärtenden und anfänglich flüssigen Kunstharz, eine vollständige Benetzung der Fasern mit Harz verhindern kann. Auf diese Weise kann das fertige Bauteil erheblich geschwächt werden. Eine Lagerung würde somit das Ablegen von Zuschnitten auf einzelnen, dafür vorgesehenen Ablageflächen und einen staubdichten Schutz des Lagers erfordern. Da die Zuschnitte zur Vermeidung der Gefahr eines Verzuges des Fasermaterials ausgebreitet bleiben müssen, ist für die Einlagerung ein Lagerplatz erforderlich, der mitunter eine beachtliche Größe besitzen muss. Dies ist in der Regel mit erheblichen Kosten verbunden.

Beim Laminieren wird ein Fasermaterial üblicherweise trocken in die Form gelegt, wobei eine hohe Verzugsgefahr herrscht. Außerdem darf das Fasermaterial in vielen Fällen nicht über die Form hinausragen, sondern sollte genau an der Formkante anliegen. Die Bestückung einer Form stellt daher in der industriellen Praxis aufgrund des losen Fasermaterials einen relativ komplizierten Vorgang dar, der üblicherweise mit der Hand ausgeführt wird und einige Zeit und Sorgfalt erfordert.

Im nächsten Arbeitsschritt wird dann das Fasermaterial mit Harz getränkt. Dabei kann es durch Verschiebungen von Fasern in dem Fasermaterial zu einer ungleichmäßigen Materialdichte und entsprechend einem ungleichmäßigen Tränken des Gewebes kommen, insbesondere an Radien und Kanten, die möglicherweise in der Form vorhandenen sind.

In einem alternativen Verfahren nach dem Stand der Technik werden Zuschnitte auf eine nicht-adhäsive Folie gelegt und darauf vorgetränkt. Durch die einsetzende Aushärtung des reaktiven Kunstharzes ist es erforderlich, das Material zügig in die endgültige Form zu bringen. Auch dieses Verfahren birgt immer noch die Gefahr, dass sich das Fasermaterial verzieht, was durch das Erfordernis der schnellen Verarbeitung noch problematischer ist.

Weiter ist aus dem Stand der Technik bekannt, sogenannte Prepregs zu benutzen. Dies sind gebrauchsfertig imprägnierte Gewebe, die in größeren Mengen auf Rollen geliefert werden. Das mit eingedicktem Reaktionsharz vorgetränkte Gewebe ist dabei beidseitig mit Folie geschützt. Um zu verhindern, dass ein vorzeitiges Aushärten stattfindet, müssen viele Arten von Prepregs tiefgekühlt werden. Trotz der Kühlung haben die Prepregs den Nachteil, dass sie in nur einem relativ kurzen Zeitraum verwendbar sind, und somit in Bezug auf die Lagerung ein Haltbarkeitsdatum besitzen. Zudem werden spezielle Maschinen für die Verarbeitung von Prepregs benötigt. Aus dieser Konstellation ergeben sich hohe Produktionskosten.

Ein weiterer Nachteil der Verfahren des Standes der Technik besteht darin, dass Zuschnitte nicht oder nur mit großem Aufwand beschriftet, gekennzeichnet oder markiert werden können. Eine Beschriftung des Fasermaterials kann das Aussehen des fertigen Werkstücks beeinträchtigen, was insbesondere dann einen Nachteil darstellt, wenn das Fasermaterial im fertigen Werkstück sichtbar ist, etwa bei Werkstücken aus Sichtcarbonmaterial. Zudem birgt das Beschriften mit berührenden farbauftragenden Werkzeugen die Gefahr des Verziehens des Fasermaterials. Gleiches gilt auch für das Bekleben mit Markierungen oder Kennzeichnungen bzw. deren Ablösen.

Aufgabe der Erfindung ist es, ein Vormaterial zu schaffen, mit welchem sich die Verarbeitung von Fasermaterial zu faserverstärkten Bauteilen einfacher und effektiver gestalten lässt.

Diese Aufgabe wird erfindungsgemäß durch ein Vormaterial mit den Merkmalen von Anspruch 1 gelöst.

Weiterhin ist es eine Aufgabe der vorliegenden Erfindung, ein Verfahren zu schaffen, mit welchem sich ein solches Vormaterial herstellen lässt.

Diese Aufgabe wird erfindungsgemäß durch ein Verfahren mit den Merkmalen von Anspruch 4 gelöst.

Erfindungsgemäß umfasst ein Vormaterial zur Herstellung eines faserverstärkten Werkstücks, eine ungetränkte Lage aus Fasermaterial, das dazu eingerichtet ist, mit einem reaktiv härtbaren Ein- oder Mehrkomponenten Kunstharz, bevorzugt Epoxidharz, Polyesterharz, Silikonharz oder UP Harz getränkt zu werden. Das Vormaterial zeichnet sich dadurch aus, dass dieses weiterhin eine flexible Lage aus Fixiermaterial umfasst, mit der die Lage des ungetränkten Fasermaterials oberflächlich in einem Kontaktbereich zwischen der flexiblen Lage aus Fixiermaterial und der Lage aus Fasermaterial in der Weise verbunden ist, dass Fasern des ungetränkten Fasermaterials in dem Kontaktbereich durch das Fixiermaterial in ihrer Lage zueinander fixiert sind. Die flexible Lage aus Fixiermaterial (14) enthält eine Lage aus Verbindungsmaterial, welches die Fasern des Fasermaterials im Kontaktbereich in ihrer Position fixiert. Das Verbindungsmaterial ist in dem reaktiv aushärtbaren Ein- oder Mehrkomponentenkunstharz 81) lösbar, bevorzugt auflösbar, sodass das Fixiermaterial nach dem Tränken mit Harz vom Fasermaterial entfernt werden kann.

Bei der bevorzugten Ausführungsform der Erfindung ist die flexible Lage aus Fixiermaterial eine Kunststofffolie, bevorzugt Polyethylenfolie, besonders bevorzugt LDPE-Folie, oder eine Polypropylenfolie, oder alternativ auch eine Lage aus Papier, die mit einer Lage aus Haftklebstoff, insbesondere einem Acrylat-Klebstoff, als Verbindungsmaterial beschichtet ist. Die Lage aus ungetränktem Fasermaterial ist bevorzugt ein Gelege, Gewebe oder auch ein Vlies aus Glasfasern, Kohlefasern, Kevlarfasern oder Kunststofffasern, oder enthält ein solches. Die Lage aus ungeränktem Fasermaterial wird dabei durch die Lage aus Haftklebstoff, der in diesem Falle ausgehärtet ist, auf der Lage aus Fixiermaterial fixiert, wobei das reaktiv härtbare Ein- oder Mehrkomponenten Kunstharz insbesondere ein Epoxidharz, Polyesterharz, Silikonharz oder ein UP-Harz ist, welches dazu eingerichtet ist, das Verbindungsmaterial chemisch zu lösen, oder zumindest anzulösen, so dass sich die Kunststofffolie oder die Lage aus Papier nach dem Laminieren der Lage aus Fasermaterial mit dem Kunstharz und einarbeiten/eindrücken der laminierten Lage in eine Form für ein faserverstärktes Bauteil leicht vom Fasermaterial abziehen lässt. Dadurch kann in kürzester Zeit eine nächste Lage des Vormaterials in derselben Weise aufgebracht werden.

Anders ausgedrückt ist das Fixiermaterial bevorzugt ein dünnes, flächiges Material, welches insbesondere eine solche Flexibilität seiner Form aufweist, dass es sich an die Oberflächenform in üblichen Formen zur Herstellung von faserverstärkten Werkstücken anschmiegen kann. Dabei kann es an kritischen Stellen eingeschnitten sein, um sich an stärkere Wölbungen anschmiegen zu können. Vorzugsweise ist das Fixiermaterial eine Kunststofffolie, bevorzugt eine flexible, jedoch nicht elastische Folie, wie z.B. eine vorgereckte Kunststofffolie, die sich bei einer auf die Enden wirkenden Zugkraft, wie sie beim Handhaben der Folie mit den Händen beim Einlegen und Verschieben in eine Form aufgebracht wird, nahezu nicht, oder nicht erkennbar dehnt.

Die Folie ist in vorteilhafter Weise eine LDPE Folie mit einer Stärke von 0,05 mm, die eine Glattfolie ist, welche eine glatte Oberfläche aufweist, und die mit einem Acrylat-Klebstoff beschichtet ist, der z.B. auf Stahl eine Klebkraft von 0,8 N / 10 mm besitzt. Die Folie, welche insbesondere als Schutzfolie zur Abdeckung von Metalloberflächen beim Transport eingesetzt wird, besitzt eine Reißfestigkeit von 12 N / 10 mm sowie eine Reißdehnung von 200%.

Wie der Anmelder in diesem Zusammenhang gefunden hat, ist das Verbindungsmaterial bei einer bevorzugten Ausführungsform der Erfindung ein Acrylatklebstoff, oder enthält einen solchen. Dieser kann je nach spezifischer Anwendung und gewünschten Eigenschaften verwendet werden. Die beiden bevorzugt verwendeten Varianten von Acrylatklebstoffen sind hierbei zum einen Acryl-Dispersionsklebstoffe. Diese sind wasserbasierte Klebstoffe, die aus Acrylatpolymeren bestehen oder solche enthalten. Sie sind umweltfreundlich, geruchlos und besitzen eine gute Haftung auf einer Vielzahl von Oberflächen und werden in der Praxis häufig z.B. als Montagekleber in der Befestigungstechnik und als Klebstoffe in der Papier- und Verpackungsindustrie sowie in der Holzverarbeitung eingesetzt.

Alternativ eignen sich neben den Acrylat-Dispersionen ebenfalls Acryl-Lösungsmittelklebstoffe. Diese bestehen aus oder enthalten Acrylatpolymere, die in organischen Lösungsmitteln gelöst sind. Sie bieten eine schnelle Aushärtungszeit und eine gute Haftung auf verschiedenen Substraten wie Metall, Kunststoffen und Gummi. Diese Klebstoffe werden z.B. in der Automobilindustrie, im Bauwesen und in der Elektronikindustrie eingesetzt.

Die zuvor beschriebenen Acrylat-Klebstoffe, die als Verbindungsmaterial auf die flexible Lage aus Fixiermaterial, sei es nur eine Kunststofffolie, ein textiles Material, Gummi/gummiartiges Material, eine Metallfolie oder Papier aufgebracht werden, werden bevorzugt in Verbindung mit einem zwei- oder Mehrkomponenten Kunstharz eingesetzt, insbesondere Epoxidharz oder Polyesterharz, welches zum Tränken /Laminieren des Fasermaterials verwendet wird und eine gewisse Zeitdauer, z.B. mehrere Minuten bis zu einigen Stunden nach dem Tränken/Laminieren selbständig polymerisiert und dadurch aushärtet. Derartige Epoxid- oder Polyesterharze oder allgemein Mehrkomponentenkunstharze sind aus dem Stand der Technik für verschiedenste Anwendungen bekannt und unterscheiden sich hinsichtlich ihrer physikalischen Eigenschaften wie z.B. Viskosität beim Laminieren, Endfestigkeit nach der Aushärtung, Bruchfestigkeit etc. in vielfacher Hinsicht. Demgemäß werden die Ein- oder Mehrkomponenten Kunstharze in Abhängigkeit von den gewünschten mechanischen Eigenschaften der herzustellenden Werkstücke ausgewählt. Beim Einsatz von Einkomponenten Kunstharzen, wie z.B. UP-Harzen oder auch Epoxidharzen, können diese gewünschten Falls auch bekannte Fotoinitiatoren enthalten, durch die die Harze nach dem Laminieren im Vormaterial und Einlegen der Zuschnitte in die Form auch durch Bestrahlen mit UV-Licht aushärtbar sind.

Wie die Anmelder in Versuchen gefunden haben, besitzen die zuvor beschriebenen Mehrkomponenten Kunstharze die Eigenschaft, dass diese die zuvor beschriebenen Acrylatklebstoffe anlösen. Dies ermöglicht es erfindungsgemäß, das Fasermaterial durch den Acrylat-Klebstoff, welcher auf das bevorzugt als Folie ausgeführte Fixiermaterial als dünne Lage aufgebracht ist, vor dem Laminieren mit dem Kunstharz auf der Folie temporär zu fixieren, so dass das auf der Folie fixierte Fasermaterial in der gewünschten Lage und Orientierung passgenau in eine Form für das Werkstück eingelegt werden kann. Weiterhin kann das auf dem Fixiermaterial durch den Acrylat-Klebstoff, oder allgemein das Verbindungsmaterial fixierte Fasermaterial in seiner fixierten Position mit dem Mehrkomponenten-Kunstharz getränkt werden, ohne dass die Gefahr besteht, dass das Fasermaterial sich verschiebt oder verlagert, während das mitunter zähe Mehrkomponenten-Kunstharz z.B. 'aufgestrichen wird. Wie die Anmelderin beobachten konnte, tritt durch das Zusammenwirken des Mehrkomponenten-Kunstharzes mit dem Acrylat-Klebstoff dann der Effekt ein, dass der Acrylat-Klebstoff chemisch gelöst wird und die Haftung zwischen dem Fasermaterial und der Folie, d.h. dem Fixiermaterial, entfällt. Dies erlaubt es, die Folie, oder allgemein das Fixiermaterial, nach dem Laminieren/Tränken des Fasermaterials in der Form zu verschieben und nach dem Andrücken, z.B. mit einer Gummirolle oder einem Pinsel, das Fixiermaterial in der Form vom Fasermaterial abzuziehen. Als besonders vorteilhaft hat es sich hierbei gezeigt, wenn eine transparente oder zumindest semi-transparente Kunststofffolie, oder auch Papier als flexibles Lage aus Fixiermaterial verwendet wird, da sich hierdurch anhand des sich nach dem vollständigen Andrücken der Folie einstellenden Erscheinungsbildes in der Form sehr einfach und mit hoher Zuverlässigkeit optisch kontrollieren lässt, ob die gesamte Lage aus Fasermaterial an der Innenseite der Form anliegt und das Fasermaterial im Kontaktbereich vollständig mit dem Ein- oder Mehrkomponenten Kunstharz benetzt wurde. Ist dies der Fall, so löst das Harz das Verbindungsmaterial an und die Folie lässt sich sehr leicht abziehen, ohne mit Harz benetzte Fasern aus der Lage des Fasermaterials mit anzuheben.

Denkbar ist es jedoch auch, eine Metallfolie, das zuvor erwähnte Papier oder ein papierartiges Material oder alternativ flächiges Gummi oder gummiartiges Material zu benutzen. Ein Vorteil von Gummi oder einem Gummimaterial, das z.B. durch eine aufgeklebte dünne Metallfolie gegen eine elastische Dehnung geschützt sein kann, besteht darin, dass es mitunter wiederverwendbar ist. Dazu kann es gegebenenfalls neu mit Verbindungsmaterial beschichtet werden.

Sofern keine mit einer Klebstofflage als Verbindungsmaterial vorbeschichtete Lage aus Fixiermaterial verwendet wird, kann das Verbindungsmaterial alternativ auch vor dem oder beim Zusammenführen der Lage aus Fasermaterial und der flexiblen Lage aus Fixiermaterial auf die Lage aus Fasermaterial oder die flexible Lage aus Fixiermaterial oder auch auf beide, aufgebracht werden, z.B. als Sprühklebstoff aufgesprüht oder als Flüssiglebstoff aufgewalzt/gerollt werden.

Weiterhin ist es denkbar, ein Textilmaterial zu verwenden, in welchem die Fasern besser zueinander fixiert sind als in dem Fasermaterial, sodass Fasern des Fasermaterials über das Textilmaterial in stärkerem Ausmaß zueinander fixiert werden können. Auch ein solches Textilmaterial kann den Vorteil haben, dass es unter Umständen wiederverwendet werden kann.

Wenn zugeschnittenes Material weiterverarbeitet wird, ist es denkbar, die Form des Zuschnitts durch Fixiermaterial mit einer entsprechenden Außenkontur auf das Fasermaterial zu übertragen. Es kann dann am Rand des Fixiermaterials entlang geschnitten werden. Obwohl Gummi oder gummiartiges Material und möglicherweise auch ein als Fixiermaterial verwendetes Textilmaterial oder eine Kunststofffolie sich in der Fläche verziehen kann, geschieht das Verziehen des Fasermaterials mit Fixierung durch eines der vorgenannten Materialien erheblich gleichmäßiger als bei einem herkömmlichen, nicht fixierten Fasermaterial. Somit kann beispielsweise ein später folgender Tränkvorgang mit einem viskosen Harz gleichmäßiger ablaufen.

Das Fasermaterial umfasst insbesondere Materialien zur Verstärkung von Werkstücken aus Verbundwerkstoff, beispielsweise Aramidfasern, Kohlenstofffasern, Glasfasern, Kevlar-fasern, Naturfasern, oder kann ein Mischtextil aus den vorgenannten Faserarten, insbesondere aus Kohlenstofffasern und Glasfasern, sein. Grundsätzlich kann das Fasermaterial beliebige langgestreckte Verstärkungsmaterialien umfassen, zum Beispiel auch Drähte oder Rovings.

Ein Grundgedanke hinter der Erfindung ist es, zu ermöglichen, für die Produktion von Bauteilen vorgefertigte, lagerbare Zuschnitte aus Fasermaterial vorab herzustellen und dazu die Fasern des Fasermaterials an dessen Kontaktfläche mit dem Fixiermaterial zueinander zu fixieren. Besonders bevorzugt werden nur Faserabschnitte direkt an der Oberfläche des Fasermaterials fixiert. Dies kann ein Verziehen des Fasermaterials selbst dann verhindern, wenn es gewölbt wird. Zudem kann die Kaschierung mit dem Fixiermaterial das Fasermaterial vor Verschmutzung und Feuchtigkeit von der Seite des Fixiermaterial her bewahren. So ist es möglich, Zuschnitte aus dem erfindungsgemäßen Vormaterial zu stapeln, zum Beispiel zum Lagern, was nach dem Stand der Technik nicht oder nur mit großem Aufwand möglich ist, da insbesondere bei Werkstücken mit einer Sichtcarbonoberfläche die Anforderungen an die Verzugsfreiheit des Fasermaterials, besonders von Geweben, sehr hoch sind. Das erfindungsgemäße Vormaterial nimmt dagegen beim Stapeln keinen Schaden und muss auch nicht besonders vorsichtig behandelt werden. Es ist auch denkbar, Zuschnitte aus dem Vormaterial aufzurollen oder vorzugsweise ohne scharfe Radien oder Knicke zusammenzufalten und als Rollen oder gefaltete Materialpakete zu lagern. Beispielsweise können solche Rollen oder Materialpakete verpackt werden, um die Zuschnitte ringsum von Verschmutzungen, Feuchtigkeit und Staubbelastung freizuhalten, zum Beispiel in Kisten.

Ein weiterer Vorteil ist, dass sich das erfindungsgemäße Vormaterial auf einem üblichen CNC-Schneidplotter aufgrund seiner verbesserten Stabilität besser schneiden lässt. Die Schneidmesser müssen weniger scharf sein und dementsprechend auch seltener geschliffen werden, was die Produktivität steigert. Zudem wird die Formgenauigkeit der Zuschnitte erhöht.

Ein weiterer Vorteil des erfindungsgemäßen Vormaterials ist darin zu sehen, dass sich ein Zuschnitt aus diesem besser in eine Form zur Herstellung eines faserverstärkten Werkstücks einlegen lässt, weil der Rand des Zuschnitts im Vergleich zu herkömmlichem Fasermaterial, welches nicht durch eine Lage Fixiermaterial stabilisiere ist, eine höhere Stabilität aufweist. Es ist daher einfacher möglich, den Rand des Fasermaterials mit hoher Genauigkeit am Rand der Form zu positionieren. Dies kann besonders für Werkstücke mit eingebetteten Sichtfasern ein erheblicher Vorteil sein. Gegenüber manchen herkömmlichen Arbeitsprozessen bei der Fertigung von Composite-Werkstücken kann dadurch der Arbeitsschritt des Abschneidens von überstehendem Fasermaterial eingespart werden, was mitunter zu einer Verringerung der Prozesszeiten und Kosteneinsparungen führt.

Als Alternative zu einem Klebstoff ist ein anderer Wirkmechanismus denkbar, bei dem ein zähflüssiges oder pastöses Verbindungsmaterial verwendet wird, das oberflächliche Faserabschnitte des Fasermaterials umschließen kann, um dieses zu fixieren. Hierbei kann es insbesondere bei textilen Fixiermaterialien vorgesehen sein, dass das zähflüssige oder pastöse Verbindungsmaterial zugleich die Oberfläche des Fixiermaterials benetzt oder dieses zumindest oberflächlich durchtränkt, und vorzugsweise bis in eine Tiefe von maximal 2 mm in das Fasermaterial eindringt.

Es ist zusätzlich oder alternativ möglich, das zähflüssige oder pastöse Verbindungsmaterial auf das Fasermaterial aufzubringen, bevor das Fixiermaterial auf das Fasermaterial aufgebracht wird. Weiter ist es denkbar, das zähflüssige oder pastöse Verbindungsmaterial im Herstellprozess des Vormaterials an der Stelle zwischen das Fasermaterial und das Fixiermaterial einzubringen, an dem die beiden Materialien im Verbindungsprozess zusammenlaufen, oder gegen die Materialflussrichtung in der Nähe davon.

In einer weiteren Ausführungsform ist das Fixiermaterial im mit Harz getränkten und ausgehärteten Zustand des Fasermaterials von dem Fasermaterial ablösbar.

In vielen Fällen wäre es störend, wenn das Fixiermaterial einer letzten Lage von Fixiermaterial auf dem fertigen Werkstück verbliebe. Deshalb hat das Verbindungsmaterial zwischen dem Fixiermaterial und dem Fasermaterial bevorzugt die Eigenschaft, dass es am fertigen Werkstück so wenig befestigungswirksam ist, d.h. haftet, dass das Fixiermaterial von dem Werkstück entfernt werden kann. Bevorzugt bleibt dabei nur wenig oder kein Verbindungsmaterial an dem Werkstück' zurück.

In einer weiteren Ausführungsform ist das Vormaterial oder ein daraus erstellter Zuschnitt auf der außenliegenden Seite des Fixiermaterials markiert, gekennzeichnet, bedruckt oder beschriftet.

Das erfindungsgemäße Vormaterial hat den Vorteil, dass das Fixiermaterial verhindert, dass sich das Fasermaterial beim Beschriften oder Markieren mit einem berührenden Farbauftragungswerkzeug oder beim Bekleben mit Markierungen oder Kennzeichnungen bzw. bei deren Ablösen nicht verzieht. Falls das Fixiermaterial im Verlauf des Herstellens des Werkstücks wieder von dem Fasermaterial abgelöst wird, werden damit zugleich auch Beschriftungen, Kennzeichnungen und/oder Markierungen entfernt. Dies ist für ästhetische Aspekte des Werkstücks vorteilhaft. Denkbar ist jedoch auch, dass Fasermaterial zu beschriften, mit Markierungen oder Aufklebern zu versehen oder zu bedrucken, was durch die Fixierung ohne Verzug möglich ist. Das Beschriften mit Hersteller- oder Materialangaben erleichtert zum Beispiel die Zuordnung eines Zuschnitts zu einem Produktionsvorgang oder zu einem Lager.

Nach einem weiteren Aspekt der Erfindung wird ein Verfahren zum Herstellen eines Vormaterials für faserverstärkte Werkstücke nach einer der vorstehend beschriebenen Ausführungsformen vorgeschlagen. Dieses zeichnet sich dadurch aus, dass das Fasermaterial in einem ungetränkten, nicht mit Harz imprägnierten Zustand, oberflächlich mit der flexiblen Lage aus Fixiermaterial verbunden, insbesondere verpresst wird, sodass Fasern des Fasermaterials durch das Verbindungsmaterial in einem Kontaktbereich zwischen der Lage aus Fasermaterial und der flexiblen Lage aus Fixiermaterial relativ zueinander fixiert werden.

Die Vorteile des Vormaterials sind bereits oben beschrieben worden. Durch die Herstellung des Vormaterials werden dieselben Vorteile erreicht. Nach dem Herstellen kann das Vormaterial insbesondere für den Transport zu einem Wickel aufgerollt oder alternativ mit einem nicht zu kleinen Umfaltradien zusammengelegt werden, so dass das Vormaterial dadurch keinen Schaden nimmt.

Bei einer bevorzugten Ausführungsform der Erfindung werden die beiden Lagen aus Fasermaterial und Fixiermaterial mit dem darauf angeordneten Verbindungsmaterial übereinander geführt und verpresst, derart, dass auf einer Fläche, d.h. in einem flächigen Abschnitt der flexiblen Lage des Fixiermaterials das Verbindungsmaterial an der Oberfläche der Lage aus Fasermaterial angeordnet ist, oder das Verbindungsmaterial in Form des Haftklebstoffs vor dem oder beim Zusammenführen der Lage aus Fasermaterial und der flexiblen Lage aus Fixiermaterial auf die Lage aus Fasermaterial oder die flexible Lage aus Fixiermaterial oder auf beide, aufgebracht wird.

Hierbei ist, wie bereits zuvor erwähnt, die flexible Lage aus Fixiermaterial bei der bevorzugten Ausführungsform der Erfindung eine Kunststofffolie, auf die das Verbindungsmaterial als Beschichtung aus Haftklebstoff, insbesondere Acrylat-Klebstoff, in vorteilhafter Weise bereits vordem Zusammenführen der Lagen aufgebracht ist.

Nach einem weiteren der Erfindung zugrunde liegenden Gedanken werden die Lage aus Fasermaterial und die flexible Lage aus Fixiermaterial flächig zusammengeführt und nach dem Zusammenführen miteinander verpresst. Dies erfolgt in vorteilhafter Weise durch wenigstens eine, bevorzugt jedoch zwei Pressrollen, die einander in Bezug auf das Fasermaterial und das Fixiermaterial gegenüberliegend angeordnet sind und zwischen denen die Lage aus Fasermaterial und die flexible Lage aus Fixiermaterial zum Verpressen hindurchgeführt werden.

Besonders bevorzugt kommt eine bekannte Metall-Schutzfolie zum Einsatz, die von einem Wickel abgerollt und als Bahn mit Hilfe von Umlenkwalzen mit ihrer Haftschicht über die Lage aus Fasermaterial geführt und in einem Walzenspalt fortlaufend mit diesem verpresst wird. Demgemäß umfasst die Erfindung auch die Verwendung einer solchen bevorzugt transparenten oder semi-transparenten Metall-Schutzfolie aus Kunststoff, insbesondere LDPE, mit einer darauf als Verbindungslage aufgebrachten Klebstofflage, insbesondere aus Acrylat-Klebstoff, als flexible Lage aus Fixiermaterial und Verbindungsmaterial in einem zuvor beschriebenen Vormaterial. Die Metall-Schutzfolie wird dabei besonders bevorzugt als Rollenware vorgehalten und als Bahn bereit gestellt.

Das Zusammenführen der Lage aus Fasermaterial und der flexiblen Lage aus Fixiermaterial kann alternativ auch auf einem ebenen Tisch durchgeführt werden, wobei der Tisch bevorzugt als Vakuumtisch ausgeführt ist, der die auf seiner ebenen Tischoberfläche aufliegende Lage aus Fasermaterial und/oder die auf dieser angeordnete flexible Lage aus Fixiermaterial ansaugt, um während des Verpressens eine laterale Verschiebung der Lagen relativ zueinander zu verhindern.

Vakuumtische sind im Stand der Technik hinlänglich bekannt. Vorzugsweise wird ein spezieller Vakuumtisch für die Verarbeitung von Faser- oder Textilmaterialien eingesetzt. Auf diese Weise kann vorteilhaft ein faltenfreies Aufeinanderlegen des Fasermaterials und des Fixiermaterials erreicht werden. Dabei kann zuerst das Fasermaterial auf den Vakuumtisch gelegt und danach das Fixiermaterial darauf positioniert werden. Dann wird das Fixiermaterial durch das Fasermaterial hindurch von dem Vakuum angesaugt und erzeugt ein Andrücken des Fixiermaterials an das Fasermaterial. Vorzugsweise wird jedoch zuerst das Fixiermaterial auf den Vakuumtisch gelegt. Ein Vorteil davon ist, dass das Fixiermaterial faltenfrei ausgebreitet bleibt, während es von dem Vakuum angesaugt wird. Da das Fixiermaterial häufig dünner als das Fasermaterial ist, neigt das Fixiermaterial tendenziell eher zur Faltenbildung, so dass dessen Faltenfreiheit einen größeren Vorteil als das Andrücken des Fixiermaterials an das Fasermaterial durch das Vakuum darstellen kann. Auf das faltenfreie Fixiermaterial kann dann das Fasermaterial aufgelegt werden.

Vorzugsweise werden das Fasermaterial und/oder das Fixiermaterial von einer Rolle abgerollt, um es als bahnförmiges Material auf dem Tisch zu positionieren. Dies ermöglicht ein gleichmäßiges und faltenfreies Auflegen.

Gemäß einer weiteren Ausführungsform der Erfindung wird eine in der zuvor beschriebenen Weise bereit gestellte flexible Lage aus Fixiermaterial und die auf dieser angeordnete und an dieser fixierte Lage aus Fasermaterial in einem nachfolgenden Verfahrensschritt durch Schneiden oder Stanzen zu einem Zuschnitt geformt, und dieser anschließend aufgerollt oder mit einem derart großen Umfaltradius zusammengelegt, dass der Zuschnitt nicht geschädigt wird, insbesondere die Fasern des Fasermaterials nicht geknickt werden.

Ein Vorteil davon ist, dass Vorprodukte, die insbesondere zugeschnitten sind, beim Weitertransport und/oder bei der Lagerung erheblich weniger Fläche benötigen. Zur Weiterverarbeitung können die Vorprodukte wieder ausgebreitet werden, ohne durch das Aufrollen bzw. Zusammenlegen und Ausbreiten Schaden zu nehmen. Insbesondere tritt kein Verzug und vorzugsweise auch kein ungleichmäßiges Tränken auf. Ein weiterer Vorteil ist darin zu sehen, dass so für eine Produktion von faserverstärkten Werkstücken das Verstärkungsmaterial vorproduziert und mit wenig Aufwand sowie beschädigungsfrei gelagert werden kann.

Nach einem weitern Gedanken der Erfindung kann es vorgesehen sein, dass mehrere Zuschnitte in einer Zuschneide-einrichtung durch gleichzeitiges Stanzen oder Schneiden von mehreren übereinanderliegenden Lagen des Vormaterials geformt werden. Hierbei kommt insbesondere eine herkömmliche Zuschneideeinrichtung, z.B. ein Schneidplotter, zum Einsatz.

Das Zuschneiden eines Zuschnitts aus dem Vorprodukt ist erheblich vereinfacht, weil die Fasern des Fasermaterials zueinander fixiert sind und dem Schnitt weniger ausweichen. Ein großer Vorteil davon ist, dass sich sauberere Schnittkanten ergeben. Es ist auch möglich, weniger scharfe Werkzeuge zu verwenden, was weniger Pausen zum Nachschärfen oder auswechseln zur Folge hat. Außerdem ergibt sich eine höhere Genauigkeit der Abmessungen des Zuschnitts, so dass die Passgenauigkeit des Zuschnitts in der Form zur Herstellung eines Werkstücks ebenfalls verbessert ist. Das Fixiermaterial wird beim Zuschneiden ebenfalls geschnitten, es sei denn, es wurde Fixiermaterial mit einer Außenkontur wie die des Zuschnitts auf das Fasermaterial aufgebracht. Durch die verbesserte Schneidbarkeit und insbesondere durch die Möglichkeit, das Vormaterial verzugsfrei zu stapeln und mehrere Lagen zugleich zu schneiden, wird das Zuschneiden erheblich effektiviert. Durch die erhöhte Präzision und die verbesserte Qualität der Schnittkanten können die erstellten Zuschnitte besser in Formen eingepasst werden, was das Einlegen erheblich beschleunigt. Dadurch kann insgesamt schneller laminiert werden. Vorteilhafterweise haben die Zuschnitte exakt die Größe, die sie gemäß maßvorgebender CAD-Modelle haben sollen.

Nach einem weiteren der Erfindung zugrunde liegenden Gedanken umfasst ein Verfahren zum Herstellen Werkstücks aus faserverstärktem Verbundwerkstoff, unter Verwendung eines zuvor beschriebenen Vormaterials die folgenden Verfahrensschritte:
Bereitstellen eines Zuschnitts aus dem Vormaterial, Aufbringen eines reaktiv härtbaren ein- oder Mehrkomponenten Kunstharzes, insbesondere eines Epoxid- oder Polyesterharzes, auf die ungetränkte Lage aus Fasermaterial, Einlegen des Vormaterials mit der mit dem reaktiv härtenden Ein- oder Mehrkomponenten Kunstharz benetzten Lage aus Fasermaterial voraus in eine Form für das Werkstück, Andrücken des Vormaterials an die Oberfläche der Form durch Beaufschlagen der Rückseite der flexiblen Lage aus Fixiermaterial mit einer Andruckkraft, derart, dass das reaktiv härtende Ein- oder Mehrkomponenten Kunstharz in den Kontaktbereich zwischen dem Fasermaterial und der Lage des flexiblen Fixiermaterials gelangt und die Fixierung der Fasern des Fasermaterials aufhebt, und Ablösen der flexiblen Lage des Fixiermaterials von der Lage aus Fasermaterial.

Da das Fixiermaterial das Markieren, Kennzeichnen, Bedrucken und Beschriften ermöglicht, kann dies beim Ausrichten von Zuschnitten in einer Form besonders vorteilhaft genutzt werden. Das Ausrichten eines Zuschnitts in Bezug auf eine Form kann dadurch schneller und präziser erfolgen.

Durch die Fixierung der Fasern in dem Fasermaterial des Vormaterials bzw. Zuschnitt zueinander kommt es nicht zur Verdichtung oder Auflockerung des Fasermaterials an einzelnen Stellen in dem Vormaterial bzw. Zuschnitt. Auf diese Weise kann erreicht werden, dass das Fasermaterial gleichmäßiger getränkt wird. Dies wiederum beschleunigt der Tränkvorgang und liefert eine gleichmäßigere Festigkeit des hergestellten Werkstücks.

Weiterhin betrifft die Erfindung ein Werkstück aus Verbundwerkstoff, das nach dem zuvor beschriebenen Verfahren hergestellt wird. Die Vorteile der Erfindung spiegeln in sich im günstigeren Preis und in der Qualität des Werkstücks wider. Durch die bessere Schneidbarkeit des Vormaterials ergeben sich außerdem sauberere Kanten an den Rändern des Fasermaterials. Insbesondere an Anlagestellen zwischen benachbarten Zuschnitten stellt dies einen großen Vorteil dar, da nicht mehr nachgearbeitet werden muss. Anwendungen für solche Werkstücke gibt es zum Beispiel im Automobilbau, im Flugzeugbau, den Bootsbau, bei Sportartikeln, zum Beispiel bei Tennis-, Badminton oder Golfschlägern, in Gehäusen und bei Schutzausrüstungen.

Eine weitere Verwendung des erfindungsgemäßen Vormaterials besteht darin, die Lage aus Fasermaterial als ein Gewebe, Gelege, oder Gewirke aus Kevlar-Fasern oder sonstigen Armierungsfasern auszuführen, welche gegen ein Eindringen von spitzen Gegenständen wie Messer oder dgl., bzw. Geschosse resistent sind. Ein solches Gewebe, Gelege, oder Gewirke aus armierten Fasern, welches sich sonst nur sehr aufwändig schneiden und vernähen lässt, wird mittels der Verbindungslage in Form von Haftkleber, wie z.B. dem zuvor erwähnten Acrylat-Klebstoff, auf der flexiblen Lage aus Fixiermaterial fixiert, und daraus ein Zuschnitt mit der gewünschten Form erstellt. Der Zuschnitt wird dann anders als bei dem zuvor beschriebenen Verfahren zur Herstellung eines Verbundbauteils nicht mit einem Kunstharz getränkt, sondern durch das Fixiermaterial hindurch, welches ebenfalls eine zuvor beschriebene Folie oder eine Papierlage sein kann, gemäß einer erfindungsgemäß auf die Zuschnitte aufgebrachten Markierungen mit einem oder mehreren anderen korrespondierenden Zuschnitten zu einem mehrlagigen räumlichen Schutzgewebe vernäht, z.B. einer schusssicheren Schutzweste. Nach dem Vernähen wird die Folie und/oder die Innenseite des Armierungsgewebes z.B. mit Wasser besprüht, welches durch die Nahtöffnungen in den Kontaktbereich gelangt, und dort die Klebeverbindung des Acrylat-Klebstoffs aufhebt. Wie vom Anmelder gefunden wurde, lässt sich die Folie, oder allgemein die flexible Lage aus Fixiermaterial, nach einer kurzen Einwirkzeit von Hand einfach von der Oberseite des vernähten Schutzgewebes abziehen, was dadurch weiter unterstützt werden kann, wenn vor dem Besprühen mit Wasser zusätzliche Öffnungen, z.B. Schnitte, in das Fixiermaterial eingebracht werden, die das Armierungsgewebe aufgrund seiner Schnittfestigkeit hingegen nicht schädigen.

Durch die stützende und fixierende Wirkung der Lage aus Fixiermaterial lassen sich die andernfalls sehr schwer herzustellenden und auch zu vernähenden Zuschnitte aus Kevlar-Gewebe sehr einfach in der gewünschten Orientierung miteinander vernähen, ohne dabei auszufransen.

Wie der Anmelder hierbei ebenfalls erkannt hat, sind die zuvor erwähnten Metallschutzfolien mit einer darauf aufgebrachten Verbindungslage aus Acrylat-Kleber bestens dazu geeignet, das Kevlar-Gewebe oder Gewirke temporär auf dem Fixiermaterial hinreichend fest zu fixieren, um dieses in der bekannten Weise durch Schneiden oder Stanzen zu einem sauberen Zuschnitt mit der gewünschten Form verarbeiten zu können, ohne dass das Gewebe an den Rändern ausfranzt.

Anders ausgedrückt umfasst diese Ausführungsform der Erfindung die Verwendung eines Zuschnitts des Vormaterials mit einer flexiblen Lage aus Fixiermaterial und einer auf dieser durch das Verbindungsmaterial fixierten Lage eines Armierungsgewebes oder Gewirkes, insbesondere aus Kevlar, zur Herstellung eines Schutzgewebes, durch Vernähen des Zuschnitts mit wenigstens einem weiteren Zuschnitt und Entfernen des Fixiermaterials, durch Besprühen mit einem Lösungsmittel für das Verbindungsmaterial, vorzugsweise Wasser. Ebenfalls mit umfasst dies eine Schutzweste, die durch Vernähen von mehreren Zuschnitten eines solchen Schutzgewebes hergestellt ist.

Die Erfindung wird nachfolgend mit Bezug auf die Zeichnungen beschrieben. In den Zeichnungen zeigen:
- Figur 1: zeigt schematisch eine Ansicht einer Vorderseite einer bevorzugten Ausführungsform einer Herstellvorrichtung für ein erfindungsgemäßes Vormaterial,
- Figur 2: zeigt schematisch eine perspektivische Ansicht der Ausführungsform aus Figur 1 schräg von obenvorn,
- Figur 3: zeigt schematisch eine perspektivische Ansicht der Ausführungsform aus Figur 2 schräg von obenhinten,
- Figur 4: zeigt schematisch einen Zuschnitt aus dem erfindungsgemäßen Vormaterial in einer Form in einer perspektivischen Ansicht, und
- Figur 4A: zeigt einen vergrößerten Ausschnitt aus der Figur 4.

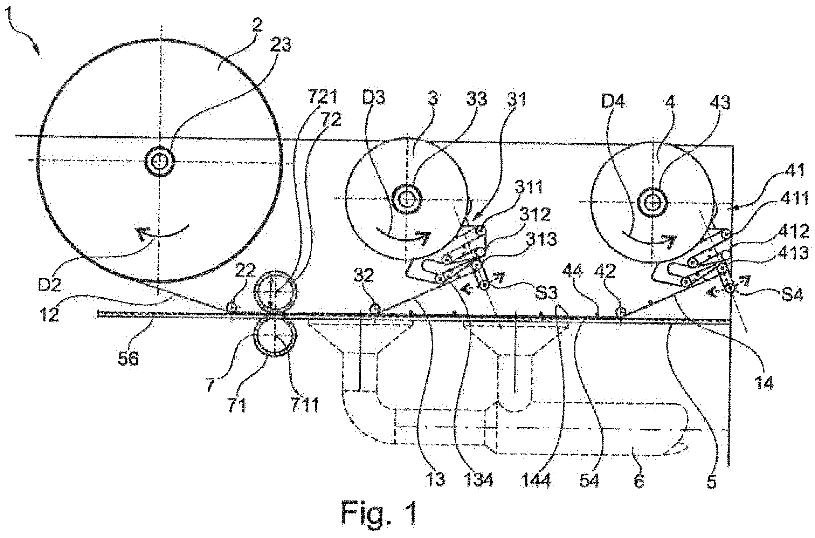

In einer Frontansicht zeigt Figur 1 eine Herstellvorrichtung 1 zum Herstellen eines Vormaterials 12 zur Verstärkung einesWerkstücks aus Verbundwerkstoff.

Die Herstellvorrichtung 1 führt ein Fasermaterial 14 mit einem Fixiermaterial 13 zusammen. Dazu wird das Fixiermaterial 14 als flexible Lage von einer Fixiermaterialrolle 4 über einen Spannmechanismus 41 abgerollt. Die Fixiermaterialrolle 4 dreht dabei in die Drehrichtung D4. Der Spannmechanismus 41 umfasst mehrere Umlenkrollen, von denen stellvertretend drei mit den Bezugszeichen 411 bis 413 bezeichnet sind. Der Spannmechanismus 41 ermöglicht eine gewisse Spannung nach dem Spannmechanismus 41 im Durchlauf des Fixiermaterials 14 durch die Herstellvorrichtung 1. Insbesondere können eine oder mehrere der Umlenkrollen 411 bis 413 einen Drehwiderstand aufweisen, dessen Größe bevorzugt über eine elektrische oder rein mechanische Bremseinrichtung mit veränderbarer Bremskraft variable einstellbar ist. Mit einem solchen Spannmechanismus 41 kann das Fixiermaterial 14 faltenfrei von der Fixiermaterialrolle 4 abgewickelt werden. Zudem kann der Spannmechanismus 41 über einen Stellmechanismus S4 geschwenkt werden, um ihn zu spannen. Dazu wird vorzugsweise ein Federmechanismus eingesetzt, der nicht explizit dargestellt ist. Mit einem solchen Spannmechanismus 41 kann das Fixiermaterial 14 faltenfrei von der Fixiermaterialrolle 4 abgewickelt werden. Von dem Spannmechanismus 41 läuft das Fixiermaterial 14 weiter zu einer Fixiermaterial-Auflegerolle 42, an welcher das Fixiermaterial 14 umgelenkt und an einen Vakuumtisch 5 angedrückt wird. Die Fixiermaterial-Auflegerolle 42 ist bevorzugt gummiert ausgeführt.

Der Vakuumtisch 5 ist an eine Vakuumanlage 6, z.B. ein Sauggebläse, angeschlossen. In der Tischplatte 56 des Vakuumtischs 5 ist eine Vielzahl von Lufteintrittsöffnüngen 54 angeordnet, durch die die Vakuumanlage 6 Luft ansaugen bzw. das aufliegende Fixiermaterial 14 in einem gewissen Ausmaß gegen die Tischplatte 56 saugen kann. Dadurch ergibt sich eine Reibung zwischen der Tischplatte 56 des Vakuumtischs 5 und dem Fixiermaterial 14. In einer alternativen, nicht dargestellten Ausführungsform ist der Vakuumtisch 5 als herkömmlicher Tisch ausgeführt. In diesem Fall kommt der Fixiermaterial-Auflegerolle 42 eine stärkere Bedeutung zu, indem diese für die Reibung zwischen dem Fixiermaterial 14 und der Tischplatte 56 sorgt. Dazu kann die Fixiermaterial-Auflegerolle 42 in Normalrichtung zu der Tischplatte 56 eingestellt werden, um das Ausmaß der Reibung zwischen dem Fixiermaterial 14 und der Tischplatte 56 einzustellen. Auch in der dargestellten Ausführungsform ist die Position der Fixiermaterial-Auflegerolle 42 in Bezug auf den Vakuumtisch 5 bevorzugt einstellbar. Dadurch kann die Einlaufposition des Fixiermaterials 14 auf dem Vakuumtisch 5 und gegebenenfalls die Stärke des Andrückens an die Tischplatte 56 des Vakuumtischs 5 eingestellt werden.

Das Fixiermaterial 14 ist vorzugsweise auf der Seite, die beim Aufliegen auf dem Vakuumtisch 5 oben zu liegen kommt, mit einem Haftklebstoff 44 als Verbindungsmaterial beschichtet. Dieser ist durch kleine Punkte auf dieser Seite des Fixiermaterials 14 symbolisiert. Als Fixiermaterial 14 wird bevorzugt eine Kunststofffolie verwendet, zum Beispiel eine Polyethylen-Folie, die besonders bevorzugt mit einem Haftklebstoff 44 beschichtet ist, insbesondere dem zuvor erwähnten Acrylat-Klebstoff.

Die Herstellvorrichtung 1 umfasst eine Vormaterialrolle 2, auf welche das hergestellte Vormaterial 12 aufgewickelt wird. Die Vormaterialrolle 2 dreht im Betrieb in die Drehrichtung D2. Bevorzugt treibt ihr Drehen die Materialbewegungen in der Herstellvorrichtung 1 an. Dadurch wird auch in der gezeigten Ausführungsform das Fixiermaterial 14 von der Fixiermaterialrolle 4 abgerollt und über den Vakuumtisch 5 gezogen, bis es zusammen mit dem Fasermaterial 13 auf die Vormaterialrolle 2 aufgewickelt wird.

Das Fasermaterial 13 wird von einer Fasermaterialrolle 3 abgewickelt und oben auf das bereits auf dem Vakuumtisch 5 liegende Fixiermaterial 14 aufgelegt. Dafür wird bevorzugt ein gleichartiger Mechanismus wie für das Fixiermaterial 14 eingesetzt. Dabei wird das Fasermaterial 13 von der Fasermaterialrolle 3 abgewickelt, durchläuft einen Spannmechanismus 31 mit mehreren Spannrollen, von denen drei stellvertretend mit den Bezugsziffern 311 bis 313 bezeichnet sind, und einem Stellmechanismus S3. Der Stellmechanismus S3 kann zur Einstellung der Vorspannung bevorzugt mit einem nicht dargestellten Federmechanismus verschwenkt werden. Mit einem solchen Spannmechanismus 31 kann das Fasermaterial 13 faltenfrei von der Fasermaterialrolle 3 abgewickelt werden. Der Spannmechanismus 31 ermöglicht zudem eine gewisse Zugspannung stromabwärts des Spannmechanismus 31 im Durchlauf des Fasermaterials 13 durch die Herstellvorrichtung 1. Nach dem Durchlaufen des Spannmechanismus 31 wird das Fasermaterial 13 an einer Fasermaterial-Auflegerolle 32 umgelenkt und dabei oben auf das bereits auf dem Vakuumtisch 5 liegende Fixiermaterial 14 aufgelegt. Die Position der Fasermaterial-Auflegerolle 32 in Bezug auf den Vakuumtisch 5 ist vorzugsweise einstellbar. Dadurch kann die Einlaufposition des Fasermaterials 13 auf den Vakuumtisch 5 und gegebenenfalls die Stärke der auf das Fixiermaterial 14 ausgeübten Andruckkraft eingestellt werden.

Durch das Zusammenführen des Fixiermaterials 14 und des Fasermaterials 13 tritt der Haftklebstoff 44 mit dem Fasermaterial 13 in Verbindung und verklebt auf diese Weise das Fixiermaterial 14 mit dem Fasermaterial 13 oberflächlich, vorzugsweise wenigstens im Kontaktbereich zwischen dem Fasermaterial 13 und dem Fixiermaterial 14.

Im weiteren Verlauf der Herstellung des Vormaterials 12 werden das Fixiermaterial 14 und das Fasermaterial 13, von der Vormaterialrolle 2 angetrieben, gemeinsam weiter über den Vakuumtisch 5 gezogen. Sie gelangen gemeinsam in eine Verpresseinrichtung 7, welche das Fasermaterial 13 mit dem Fixiermaterial 14 intensiver verbindet. Dennoch bleibt diese Verbindung oberflächlich. In diesem Ausführungsbeispiel umfasst die Verpresseinrichtung 7 zwei Presswalzen 71 und 72. Die Presswalzen 71 und 72 sind vorzugsweise gummiert ausgeführt. Besonders bevorzugt lässt sich die Vorspannung der Presswalzen 71 und 72 gegeneinander und damit die Stärke des Pressens einstellen, indem deren Drehachsen 711 und 721 aufeinander zu oder voneinander weg bewegt werden.

Nach dem Durchlaufen der Verpresseinrichtung 7 läuft das verpresste Vormaterial 12 zu einer Vormaterial-Umlenkrolle 22, an welcher das Vormaterial 12 in Richtung der Vormaterialrolle 2 umgelenkt wird. Dabei hebt es sich von der Tischplatte 56 ab und wird schließlich von der Vormaterialrolle 2 aufgewickelt. Die Vormaterialrolle 2 ist bevorzugt motorisch angetrieben. Es ist jedoch auch denkbar, die Vormaterialrolle 2 mit der Hand anzutreiben, beispielsweise mit einer Kurbel.

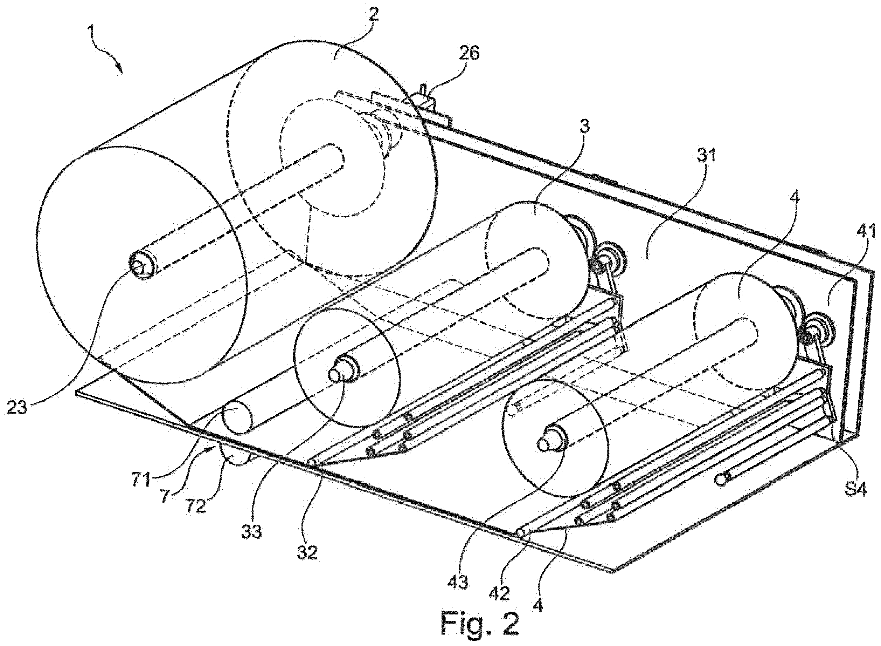

Figur 2 zeigt dieselbe Herstellvorrichtung 1 in einer perspektivischen Darstellung. Gleiche Merkmale sind mit gleichen Bezugszeichen bezeichnet. Es sei auf die Beschreibung mit Bezug auf Figur 1 verwiesen.

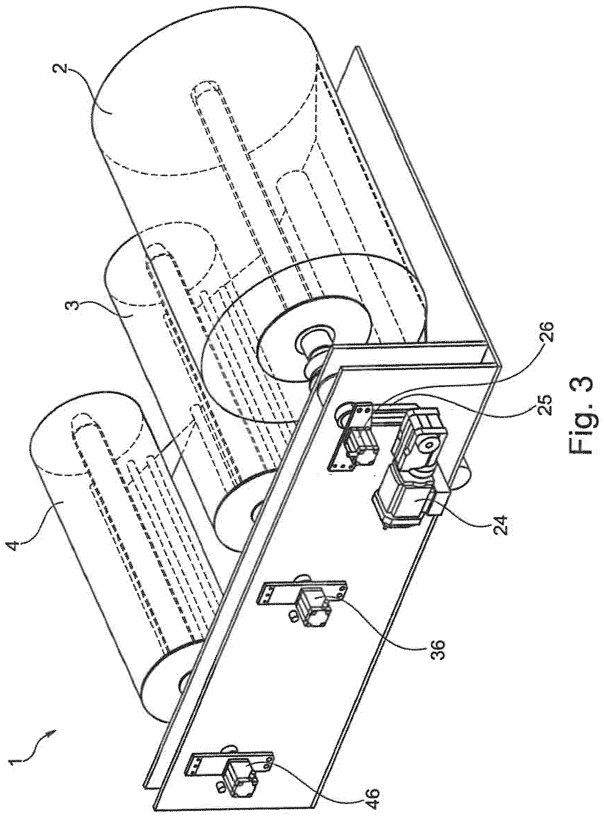

Figur 3 zeigt dieselbe Herstellvorrichtung 1 in einer perspektivischen Darstellung schräg von der Rückseite. Gleiche Merkmale sind mit gleichen Bezugszeichen bezeichnet. Es sei auf die Beschreibung mit Bezug auf Figur 1 verwiesen.

Zusätzlich zeigt die Figur 3 auf der Rückseite einen Antrieb 24 für die Vormaterialrolle 2. Der Antrieb 24 ist elektromotorisch ausgebildet und bewegt die Vormaterialrolle 2 beispielsweise über einen Riemen 25 oder ein sonstiges Zugmittel- oder Zahnradgetriebe. Alternativ kann die Vormaterialrolle auch durch einen lagegeregelten Elektromotor direkt angetrieben werden.

Weiter ist auf der Figur 3 für die Vormaterialrolle 2, die Fasermaterialrolle 3 und die Fixiermaterialrolle 4 je ein Pneumatikzylinder 26, 36 bzw. 46 vorgesehen. Dadurch können sich die Vormaterialrolle 2, die Fasermaterialrolle 3 und die Fixiermaterialrolle nicht unbeabsichtigt frei drehen. Die Vormaterialrolle 2, die Fasermaterialrolle 3 und die Fixiermaterialrolle 4 wirken jeweils mit einer Spannrolle 23, 33 und 43 zusammen, die durch die Pneumatikzylinder 26, 36 bzw. 46 eine pneumatisch gesteuerte Bremsfunktion aufweisen können. Alternativ können anstelle eines Pneumatikzylinders auch elektrische Bremseinrichtungen zum Einsatz gelangen, die bevorzugt in die Rollen integriert sind.

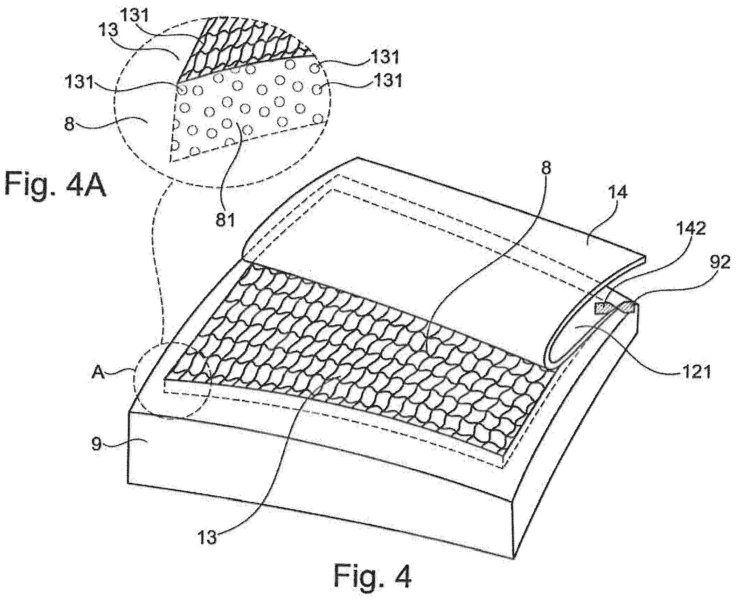

Figur 4 zeigt schematisch ein faserverstärktes Werkstück 8, das aus einem Zuschnitt 121 hergestellt ist. Der Zuschnitt 121 ist aus einem erfindungsgemäßen Vormaterial 12 zugeschnitten. Das Werkstück 8 befindet sich in einer Form 9, in der der Zuschnitt 121 mit Harz 81 getränkt und ausgehärtet wurde. Figur 4 zeigt das Abziehen des Fixiermaterials 14 von dem ausgehärteten Werkstück 8. Das Fixiermaterial 14 ist in dem dargestellten Fall eine Kunststofffolie, die zuvor mit einem Haftklebstoff auf das Fasermaterial 13 des Zuschnitts 121 aufgeklebt war. Der Haftklebstoff hat sich in dem Harz 81 gelöst, bzw. wurde durch dieses angelöst und ist nun darin über das Werkstück 8 verteilt enthalten, sodass er nicht mehr auf der Oberfläche des Fasermaterials 13 vorhanden ist.

Wie die Anmelder gefunden haben, wird die Klebwirkung zwischen dem Fasermaterial 13 und dem Fixiermaterial 14 dadurch aufgehoben. Das Fixiermaterial 14 kann daher leicht von dem ausgehärteten Werkstück 8 abgezogen werden.

Auf dem Fixiermaterial 14 ist bei einer bevorzugten Ausführungsform der Erfindung in vorteilhafter Weise eine Zuschnittmarkierung 142 aufgebracht. Eine zugehörige Formmarkierung 92 ist auf der Form 9 an einer Stelle angebracht. Diese markiert die korrekte Lage des Zuschnitts 121 in der Form 9, wenn die Zuschnittmarkierung 142 mit der Formmarkierung 92 fluchtet. Wie von den Anmeldern erkannt wurde, erleichtert dies das schnelle und zuverlässig richtige Einlegen des Zuschnitts 121 in die Form 9 erheblich.

Figur 4A zeigt vergrößert einen Ausschnitt A aus der Figur 4, der eine Ecke des Werkstücks 8 beinhaltet. In der Figur 4A ist eine Seite des Werkstücks 8 zu sehen, in der die Fasern 131 des Fasermaterials 13 enden. Diese Seite ist in die Form 9 eingebettet, weshalb die Ränder dieser Seite, die in der Form 9 liegen, gestrichelt dargestellt sind. Zwischen den Enden der Fasern 131 ist schematisch ausgehärtetes Harz 81 dargestellt. Bei dem in den Figuren 4 und 4A gezeigten Fasermaterial 13 handelt es sich um ein Gewebe oder Gelege, bevorzugt ein Glasfaser- oder Kohlefaser- Gewebe oder Gelege, oder ein Kevlar- Gewebe oder Gelege.

## Patentansprüche

1. Vormaterial (12) zur Herstellung eines faserverstärkten Werkstücks (8), welches eine ungetränkte Lage aus Fasermaterial (13) umfasst, das dazu eingerichtet ist, mit einem reaktiv härtbaren Ein- oder Mehrkomponenten Kunstharz, bevorzugt Epoxidharz, Polyesterharz, oder UP Harz getränkt zu werden, wobei, das Vormaterial weiterhin eine flexible Lage aus Fixiermaterial (14) umfasst, mit der die ungetränkte Lage aus Fasermaterial (13) oberflächlich in einem Kontaktbereich zwischen der flexiblen Lage aus Fixiermaterial (14)und der Lage aus Fasermaterial (13) in der Weise verbunden ist, dass Fasern (131) des ungetränkten Fasermaterials (13) in dem Kontaktbereich durch das Fixiermaterial (14) in ihrer Lage zueinander fixiert sind, **dadurch gekennzeichnet, dass** die flexible Lage aus Fixiermaterial (14) eine Lage aus Verbindungsmaterial (44) enthält, welches die Fasern (131) des Fasermaterials (13) im Kontaktbereich in ihrer Lage fixiert, und welches in dem reaktiv aushärtbaren Ein- oder Mehrkomponentenkunstharz 81) lösbar, bevorzugt auflösbar ist, sodass das Fixiermaterial (14) nach dem Tränken mit Harz (81) vom Fasermaterial (13) entfernbar ist.

2. Vormaterial (12) nach Anspruch 1, **dadurch gekennzeichnet, dass** die flexible Lage aus Fixiermaterial eine Kunststofffolie, bevorzugt Polyethylenfolie, bevorzugt LDPE-Folie, oder Polypropylenfolie, oder eine Lage aus Papier, aus Gummi oder einem textilen Material ist, die mit einer Lage aus Haftklebstoff, insbesondere einem Acrylat-Klebstoff, als Verbindungsmaterial (44) beschichtet ist, und dass die Lage aus ungetränktem Fasermaterial ein Gelege, Gewebe oder Vlies aus Glasfasern, Kohlefasern oder Kunststofffasern umfasst, oder ein solches enthält, welches durch die Lage aus Klebstoff auf der Lage aus Fixiermaterial fixiert wird, wobei das reaktiv härtbare Ein- oder Mehrkomponenten Kunstharz insbesondere ein Epoxidhard, Polyesterharz oder ein UP-Harz ist, welches dazu eingerichtet ist, das Verbindungsmaterial chemisch anzulösen.

3. Vormaterial (12) nach einem der vorangehenden Ansprüche, **dadurch gekennzeichnet,**
**dass** das Vormaterial (2) oder ein daraus geformter Zuschnitt (121) auf der der Lage aus Fasermaterial (13) abgewandten außenliegenden Seite des Fixiermaterials (14) markiert, gekennzeichnet, bedruckt oder beschriftet ist und/oder dass das Fixiermaterial transparent oder semitransparent ist.

4. Verfahren zum Herstellen eines Vormaterials (12) nach einem der vorangehenden Ansprüche, aus einer Lage eines ungetränkten Fasermaterials (13) und einer flexiblen Lage eines Fixiermaterials(14), **dadurch gekennzeichnet, dass** das Fasermaterial (13) in einem ungetränkten, nicht mit Harz (81) imprägnierten Zustand, oberflächlich mit der flexiblen Lage aus Fixiermaterial (14) verbunden, insbesondere verpresst wird, sodass Fasern (131) des Fasermaterials (13) durch das Verbindungsmaterial (44) in einem Kontaktbereich zwischen der Lage aus Fasermaterial (13) und der flexiblen Lage aus Fixiermaterial (14) relativ zueinander fixiert werden.

5. Verfahren nach Anspruch 4, **dadurch gekennzeichnet, dass** beim Verpressen der Lage des Fasermaterials (13) auf einer Fläche (144) der flexiblen Lage des Fixiermaterials (14) das Verbindungsmaterial (44) zum Fixieren von Fasern (131) an der Oberfläche der Lage aus Fasermaterial (13) angeordnet ist, oder das Verbindungsmaterial (44) vor dem oder beim Zusammenführen der Lage aus Fasermaterial (13) und der flexiblen Lage aus Fixiermaterial (14) auf die Lage aus Fasermaterial (13) oder die flexible Lage aus Fixiermaterial (14) oder auf beide, aufgebracht wird.

6. Verfahren nach Anspruch 4 oder 5, **dadurch gekennzeichnet, dass** die flexible Lage aus Fixiermaterial (14) eine Kunststofffolie ist, auf die das Verbindungsmaterial (44) als Beschichtung aus Haftklebstoff, insbesondere Acrylat-Klebstoff, aufgebracht ist.

7. Verfahren nach einem der Ansprüche 4 bis 6, **dadurch gekennzeichnet, dass** die Lage aus Fasermaterial (13) und die flexible Lage aus Fixiermaterial (14) flächig zusammengeführt und nach dem Zusammenführen miteinander verpresst werden, insbesondere durch wenigstens eine oder bevorzugt zwei Pressrollen (71, 72), die einander in Bezug auf das Fasermaterial (13) und das Fixiermaterial (14) gegenüberliegend angeordnet sind und zwischen denen die Lage aus Fasermaterial (13) und die flexible Lage aus Fixiermaterial (14) zum Verpressen hindurchgeführt werden.

8. Verfahren nach einem der Ansprüche 4 bis 7, **dadurch gekennzeichnet, dass** das Zusammenführen der Lage aus Fasermaterial(13) und der flexiblen Lage aus Fixiermaterial (14) auf einem Tisch durchgeführt wird, wobei der Tisch bevorzugt als Vakuumtisch (5) ausgeführt ist, der die auf seiner Tischoberfläche aufliegende Lage aus Fasermaterial (13) und/oder die auf dieser angeordnete flexible Lage aus Fixiermaterial (14) ansaugt.

9. Vorrichtung (1) zur Durchführung des Verfahrens nach einem der Ansprüche 5 bis 8, umfassend einen Vakuumtisch (5), der dazu eingerichtet ist, eine Lage eines ungetränkten Fasermaterials (13) auf seiner Tischoberfläche anzusaugen und temporär zu fixieren, und eine Verpresseinrichtung (7), die dazu eingerichtet ist, eine flexible Lage eines Fixiermaterials (14) über die Lage aus Fasermaterial (13) zuzuführen und mit diesem zu verpressen.

10. Verfahren zum Handhaben eines Vormaterials (12) nach einem der Ansprüche 1 bis 3, **dadurch gekennzeichnet, dass** die flexible Lage aus Fixiermaterial (14) und die auf dieser angeordnete und an dieser fixierte Lage aus Fasermaterial (13) durch Schneiden oder Stanzen zu einem Zuschnitt (12) geformt werden, und der Zuschnitt (12) aufgerollt oder mit einem derart großen Umfaltradius zusammengelegt wird, dass der Zuschnitt (12) nicht geschädigt wird, insbesondere die Fasern des Fasermaterials nicht geknickt werden.

11. Verfahren nach Anspruch 10, **dadurch gekennzeichnet, dass** der Zuschnitt (121) zu einer Rolle aufgerollt oder mehrere Zuschnitte (121) zu Stapeln zusammengelegt gelagert und/oder als Stapel transportiert werden.

12. Verfahren zum Zuschneiden eines Zuschnitts (121) nach
Anspruch 10, **dadurch gekennzeichnet,**
**dass** mehrere Zuschnitte (121) in einer Zuschneideeinrichtung durch gleichzeitiges Stanzen oder Schneiden von mehreren übereinanderliegenden Lagen des Vormaterials (12) geformt werden.

13. Verfahren zum Herstellen eines Werkstücks (8) aus faserverstärktem Verbundwerkstoff, unter Verwendung eines Vormaterials (2) nach einem der Ansprüche 1 bis 3 mit folgenden Verfahrensschritten:
Bereitstellen eines Zuschnitts (121) aus dem Vormaterial,
Aufbringen eines reaktiv härtbaren ein- oder Mehrkomponenten Kunstharzes, insbesondere eines Epoxid- oder Polyesterharzes auf die ungetränkte Lage aus Fasermaterial (13),
Einlegen des Vormaterials mit der mit dem reaktiv härtenden Ein- oder Mehrkomponenten Kunstharz benetzten Lage aus Fasermaterial voraus in eine Form,
Andrücken des Vormaterials an die Oberfläche der Form durch Beaufschlagen der Rückseite der flexiblen Lage aus Fixiermaterial (14) mit einer Andruckkraft, derart, dass das reaktiv härtende Ein- oder Mehrkomponenten Kunstharz in den Kontaktbereich zwischen dem Fasermaterial und der Lage des flexiblen Fixiermaterials gelangt und die Fixierung der Fasern des Fasermaterials aufhebt, und Ablösen der flexiblen Lage des Fixiermaterials von der Lage aus Fasermaterial.

14. Verfahren nach Anspruch 13, **dadurch gekennzeichnet, dass** der Zuschnitt (121) aus dem Vormaterial (121) mit einer Markierung (142) zur Ausrichtung des Zuschnitts (121) in der Form (9) versehen wird, welcher bevorzugt auf der flexiblen Lage aus Fixiermaterial (14) angeordnet ist, und dass der mit dem flüssigen reaktiv härtbaren Ein- oder Mehrkomponentenkunstharz benetzte Zuschnitt (121) in der Form (9) anhand der Markierung (142) ausgerichtet wird.

15. Verfahren nach Anspruch 14, **dadurch gekennzeichnet, dass** nach dem Ablösen der flexiblen Lage des Fixiermaterials ein weiterer mit einem flüssigen reaktiv härtbarem Ein- oder Mehrkomponenten Kunstharz getränkter, und mit einer Markierung versehener Zuschnitt im Naßin Naß- Verfahren in die Form eingelegt und in dieser anhand der Markierung (142) ausgerichtet wird.
